# FASCICULE DE BREVET EUROPEEN

(11) **EP 3 562 765 B1**
(45) Date de publication et mention de la délivrance du brevet: **21.08.2024**
(21) Numéro de dépôt: 17838134.9
(22) Date de dépôt: 22.12.2017
(51) Int. Cl.: B65G 47/51, B65G 47/71

(54) **DISPOSITIF DE TRANSFERT DE PRODUITS**
VORRICHTUNG ZUM TRANSFER VON PRODUKTEN
DEVICE FOR TRANSFERRING PRODUCTS

(30) Priorité: 28.12.2016 FR 1663446
(43) Date de publication de la demande: 06.11.2019
(73) Titulaire: Sidel Participations, 76930 Octeville-sur-Mer (FR)
(72) Inventeur: BERGER, Julien, 67116 Reichstett (FR)
(74) Mandataire: Sidel Group
(86) Numéro de dépôt international: PCT/FR2017/053841
(87) Numéro de publication internationale: WO 2018/122525

(56) Documents cités:
- WO-A1-2014/076390
- FR-A1- 2 820 730
- FR-A1- 2 993 870

## Description

La présente invention se situe dans le domaine du convoyage de produits au sein d'une ligne industrielle de traitement. Elle concerne plus particulièrement un dispositif de transfert de produits, apte à transférer des produits d'une surface d'accumulation vers un convoyeur de sortie.

Le document US5353915 propose un dispositif pouvant être utilisé pour transférer des produits d'une surface d'accumulation vers un convoyeur de sortie. Plusieurs convoyeurs activés alternativement sont utilisés, avant de converger vers un convoyeur unique en aval. Ce dispositif est complexe, prenant beaucoup d'espace et il est peu flexible.

Le document US6202827 présente un dispositif permettant de transférer des produits d'une surface d'accumulation vers un convoyeur de sortie. La surface d'accumulation est mobile et amène les produits contre une paroi fixe, où un moyen de poussée transfère les produits vers le convoyeur de sortie. Les produits sont mis sous pression les uns contre les autres pour assurer la compacité de l'ensemble, puis la surface d'accumulation fait un mouvement de marche arrière pour enlever la pression sur la rangée prête à s'engager sur le convoyeur de sortie. Cette rangée est alors poussée par un vérin vers le convoyeur de sortie. Pour des bouteilles rondes, il existe des accessoires supplémentaires pour éviter le quinconçage en sortie, ce qui ajoute à la complexité de cette solution. Ce dispositif ne permet cependant pas d'éviter la formation de trous entre les lots sur le convoyeur de sortie.

FR2820730A1 divulgue un procédé de transfert selon le préambule de la revendication 1 ainsi qu'un dispositif de transfert selon le préambule de la revendication 3.

La présente invention a pour objet de pallier au moins en partie ces inconvénients en dégageant transversalement, de façon cyclique, à chaque fois un lot de produits vers un convoyeur d'accélération, dit convoyeur intermédiaire, qui amène les produits à la vitesse du convoyeur de sortie.

A cet effet, elle propose un procédé de transfert de produits d'une surface d'accumulation vers un convoyeur de sortie selon la revendication 1 et qui comporte les étapes suivantes :
- décélération du convoyeur intermédiaire, et transfert des produits entre la surface d'accumulation et le convoyeur intermédiaire par ledit moyen de poussée,
- accélération du convoyeur intermédiaire, et transfert des produits du convoyeur intermédiaire vers le convoyeur de sortie.

Grâce à ces dispositions, le transfert de produits peut se faire en continu entre une surface d'accumulation fixe dans le sens du convoyage des produits et un convoyeur de sortie fonctionnant à vitesse normalement constante avec un risque de chutes de produits réduit, les étapes de transfert se produisant entre deux surfaces dont la vitesse relative l'une par rapport à l'autre est sensiblement nulle.

En outre, comme il va encore être décrit, un avantage de l'invention est que les lots sont reconstitués sur le convoyeur de sortie avec un espace entre eux très faible par rapport à la taille du lot et des produits elles-mêmes, voire nul.

Avantageusement:
- ledit transfert d'au moins une partie des produits du convoyeur intermédiaire vers le convoyeur de sortie peut se faire par un guide incliné disposé au niveau du convoyeur intermédiaire de sorte que la combinaison de la poussée vers l'avant exercée par le convoyeur intermédiaire et l'effet dudit guide produise une poussée transversale poussant lesdits produits vers le convoyeur de sortie, ainsi les produits peuvent être transférés du convoyeur intermédiaire vers le convoyeur de sortie sans nécessiter de moyen de transfert complexe,
- la au moins une partie des produits transférée par ledit moyen de poussée peut être une partie amont, et la au moins une partie des produits transférée par ledit guide peut être une partie en aval dans le sens de convoyage sur le convoyeur de sortie, ainsi une partie des produits peut être transférée rapidement par le moyen de poussée afin de libérer le convoyeur intermédiaire, et les produits qui ne sont plus en prise avec la paroi de poussée du fait de leur avancée sur le convoyeur intermédiaire sont transférés par le guide ; le lot initialement présent sur la surface d'accumulation peut donc être reconstitué sur le convoyeur de sortie sans espacement entre ses produits consécutifs,

- le procédé selon l'invention peut comporter en outre les étapes suivantes :
   - levée du moyen de poussée depuis sa hauteur de poussée jusqu'à ce qu'il soit plus haut que les produits,
   - retour transversal du moyen de poussée vers la surface d'accumulation, jusqu'à une position où il peut s'insérer entre le lot suivant et celui d'après,
   - descente du moyen de poussée jusqu'à sa hauteur de de poussée,
ainsi le moyen de poussée peut retourner en position pour transférer le lot de produits suivant sans perturber les produits présents sur la surface d'accumulation, et en évitant un cycle plus long dans un plan horizontal, et un nouveau cycle de transfert peut débuter.

La présente invention concerne également un dispositif de transfert de produits d'une surface d'accumulation vers un convoyeur de sortie selon la revendication 3. Grâce à ces dispositions, le transfert de produits peut se faire en continu entre une surface d'accumulation fixe et un convoyeur de sortie fonctionnant à vitesse constante avec un risque de chutes de produits réduit, les étapes de transfert se produisant entre deux surfaces dont la vitesse relative l'une par rapport à l'autre est sensiblement nulle.

Avantageusement:
- ledit dispositif de transfert de produits peut comporter un guide incliné disposé au niveau du convoyeur intermédiaire à son extrémité en aval, de sorte que la combinaison de la poussée vers l'avant exercée par le convoyeur intermédiaire et l'effet dudit guide produise une poussée transversale poussant au moins une partie desdits produits vers le convoyeur de sortie, ainsi les produits peuvent être transférés du convoyeur intermédiaire vers le convoyeur de sortie sans nécessiter de moyen de transfert complexe. Le moyen de poussée est simple puisque immobile longitudinalement tout en garantissant un lot compact recréé sur le convoyeur de sortie,
- ledit moyen de poussée peut comporter une paroi de poussée, et une paroi de maintien, ce dispositif simple permettant d'adjoindre à la paroi de poussée une paroi se trouvant en aval des produits dans la direction dans laquelle ils sont poussés, et donc de limiter le risque de chutes de produits lors de leur transfert,
- ledit dispositif de transfert de produits peut comporter un moyen de poussée secondaire, configuré pour pousser au moins une partie des produits depuis le convoyeur intermédiaire vers le convoyeur de sortie, ainsi pendant que le moyen de poussée secondaire pousse les produits du convoyeur intermédiaire vers le convoyeur de sortie, le moyen de poussée peut aller chercher le lot suivant sur la surface d'accumulation, le procédé peut donc être plus rapide. Le dispositif a ainsi un moyen de poussée pour dégager les produits par lot depuis la surface d'accumulation jusque sur le convoyeur intermédiaire, et un autre moyen distinct, à savoir un moyen de poussée secondaire, qui pousse les produits du convoyeur intermédiaire jusque sur le convoyeur de sortie. Cela contribue à des temps de cycles faibles puisque les outils peuvent travailler en parallèle. Alternativement, pour avoir un mécanisme simple, on peut préférer utiliser le même moyen de poussée pour faire les deux transferts successifs.
- ledit moyen de poussée peut comporter un mécanisme de levage, configuré pour lui permettre de passer au-dessus des produits, ainsi le moyen de poussée peut retourner en position pour transférer le lot de produits suivant sans perturber les produits présents sur la surface d'accumulation, tout en évitant un cycle de retour long dans un plan horizontal, et un nouveau cycle de transfert peut débuter.

La présente invention sera mieux comprise à la lecture de la description détaillée qui fait suite, en référence aux figures annexées dans lesquelles :
- La figure 1 est une vue schématique en séquence d'un procédé selon un mode de réalisation de l'invention,
- La figure 2 est une vue schématique en séquence d'un procédé selon un autre mode de réalisation de l'invention.

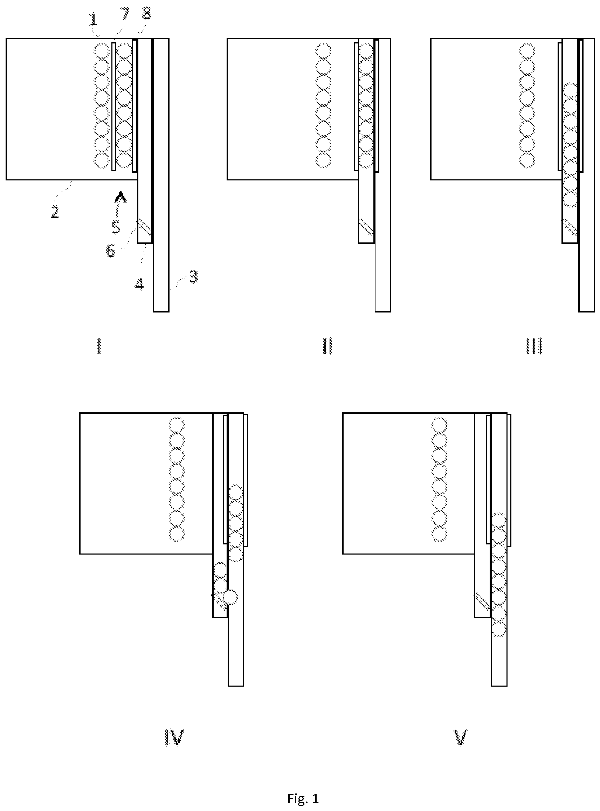

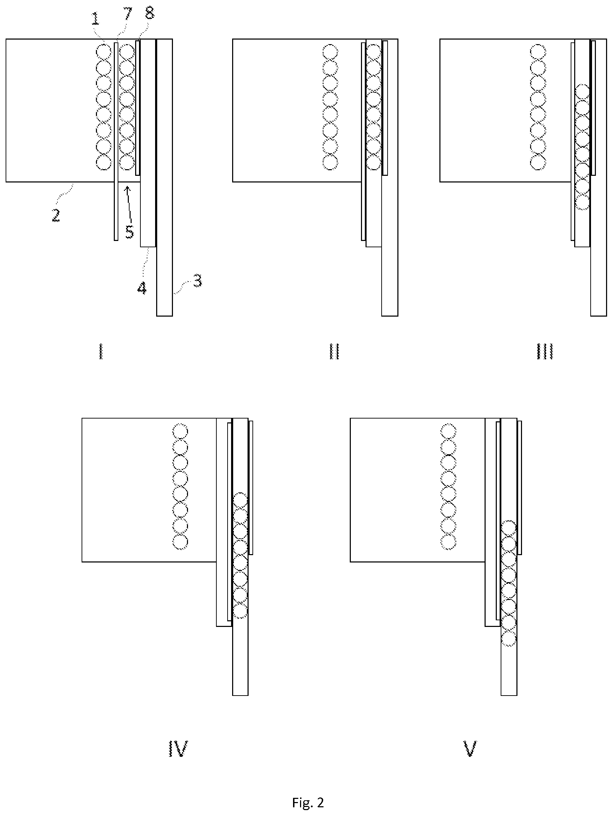

Le dispositif de transfert selon l'invention, représenté en fig. 1 et 2, permet de transférer des produits 1 d'une surface d'accumulation 2 vers un convoyeur de sortie 3. Les produits 1 peuvent être stockés sur la surface d'accumulation 2 pendant un certain temps, puis être transférés vers le convoyeur de sortie 3 selon les besoins d'une machine en aval.

Sur la surface d'accumulation 2, les produits sont disposés en rangs successifs, c'est-à-dire en lots qui s'étendent, chacun, parallèlement au convoyeur de sortie 3, ces lots étant l'un à côté de l'autre dans une direction perpendiculaire à celle dudit convoyeur. Chaque transfert jusque sur le convoyeur de sortie 3 revient alors à y déposer un tel lot.

Le convoyeur de sortie 3 circule à une vitesse qui dépend du besoin de production, et peut être constante dans le temps. On parle d'une vitesse nominale.

Dans un but de meilleure compréhension des mouvements, on nommera les directions X, Y et Z de la manière suivante : la direction X représente la direction longitudinale d'avancée des produits 1 sur le convoyeur de sortie 3, la direction Y la direction horizontale perpendiculaire à X, et la direction Z la direction verticale.

Les produits 1 sont d'abord transférés transversalement selon Y de la surface d'accumulation 2 vers un convoyeur intermédiaire 4 à l'aide d'un moyen de poussée 5.

Le moyen de poussée 5 a une action transversale sur les produits, c'est-à-dire qu'il les déplace perpendiculairement à la direction d'avance du convoyeur de sortie 3, depuis la surface d'accumulation 2.

Les produits 1 sont transférés par lots de produits 1 alignés dans la direction longitudinale, à savoir la direction X.

La surface d'accumulation 2 peut être mobile afin de faire avancer les produits 1 dans une direction transversale selon Y, et de les rapprocher du convoyeur intermédiaire 4. Une bande, que comprend la surface d'accumulation 2 amène en permanence un nouveau lot de produits 1 après que l'ancien lot a été dégagé. Dans ce mode de réalisation particulier, le moyen de poussée 5 n'a pas besoin de se déplacer sur toute la surface de la surface d'accumulation 2, l'installation de transfert est ainsi simplifiée.

Ainsi, préférablement, la surface d'accumulation 2 est sous la forme d'un moyen d'entrainement dans la direction transversale au convoyeur intermédiaire 4. La surface d'accumulation 2 elle-même assure alors l'avance des lots longitudinaux de produits jusqu'au bord de ladite surface d'où le moyen de poussée 5 les dégage vers le convoyeur intermédiaire 4. Le moyen de poussée 5 peut alors revenir toujours jusqu'à la même position pour chercher un nouveau lot longitudinal, ce qui raccourcit le temps de cycle, puisque le déplacement transversal des lots depuis le côté de la surface d'accumulation 2 opposé au convoyeur intermédiaire 4 jusqu'à ce dernier peut se faire pendant l'évacuation d'un lot.

Lors du transfert des produits 1 de la surface d'accumulation 2 vers le convoyeur intermédiaire 4, la vitesse du convoyeur intermédiaire 4 est faible, voire nulle. De plus le convoyeur intermédiaire 4 est placé adjacent à fleur de la surface d'accumulation 2, de telle sorte que le transfert des produits 1 selon Y de la surface d'accumulation 2 vers le convoyeur intermédiaire 4 est facilité, et peut se faire par simple balayage du moyen de poussée 5. Le moyen de poussée 5 peut alors simplement pousser les produits 1 sans que le risque de chute de produits 1 ne soit important. Lorsque les produits 1 sont entièrement transférés vers le convoyeur intermédiaire 4, le convoyeur intermédiaire 4 accélère, jusqu'à atteindre une vitesse proche, voire égale, de celle du convoyeur de sortie 3. Par exemple par le moyen de poussée 5, au moins une partie des produits 1 sont alors transférés du convoyeur intermédiaire 4 vers le convoyeur de sortie 3, qui peut être placé à fleur du convoyeur intermédiaire 4, de l'autre côté par rapport à la surface d'accumulation 2.

Le convoyeur intermédiaire 4 fonctionne donc à une vitesse variant entre deux extrêmes : une faible vitesse pour éviter les chutes de produits 1 lors du transfert de la surface d'accumulation 2 vers le convoyeur intermédiaire 4, et une vitesse élevée, par exemple proche de la vitesse du convoyeur de sortie 3, pour éviter les chutes de produits 1 lors du transfert du convoyeur intermédiaire 4 vers le convoyeur de sortie 3. Ainsi lors des transferts successifs, les vitesses relatives selon X entre les surfaces sont faibles de telle sorte que les risques de chutes de produits 1 sont réduits.

Le convoyeur intermédiaire 4 accélère jusqu'à une vitesse qui correspond essentiellement à celle du convoyeur de sortie 3. Une fois qu'il a atteint cette vitesse, les produits sont transférés du convoyeur intermédiaire 4 au convoyeur de sortie, préférablement par l'action du moyen de poussée 5, combinée avec l'action d'un guide 6, comme décrit plus loin et illustré à la figure 1.

Avec un moyen de poussée 5 suffisamment long, on peut ainsi transférer un lot de produits 1 de la longueur de la surface d'accumulation 2. Mais lors du transfert d'un lot de produits 1 vers le convoyeur de sortie 3, le moyen de poussée 5 ne peut s'engager sur le convoyeur de sortie 3 que lorsque tous les produits 1 du lot précédent sont partis suffisamment loin sur le convoyeur de sortie 3. Cela va donc produire un espace entre les lots sur le convoyeur de sortie 3. De tels espaces peuvent être résorbés par le passage sur un convoyeur plus lent. Néanmoins cela réduit le débit de produits 1 fournis à la machine en aval.

On peut prévoir que le moyen de poussée 5 est mobile longitudinalement à la vitesse du convoyeur de sortie 3, de sorte à accompagner tous les produits 1 du lot de produits 1 jusque sur le convoyeur de sortie 3.

Selon un mode préféré de réalisation de l'invention, le dispositif de transfert comporte encore un guide 6, disposé au-dessus du convoyeur intermédiaire 4 au-delà du moyen de poussée 5, autrement dit au-delà du prolongement selon Y de la surface d'accumulation 2, et permettant de guider les produits 1 vers le convoyeur de sortie 3. Comme illustré en fig. 1, le guide 6 permet de transférer du convoyeur intermédiaire 4 vers le convoyeur de sortie 3 les produits 1 les plus en aval d'un lot de produits 1 qui, suite à la mise en route du convoyeur intermédiaire 4, ne sont plus en prise avec le moyen de poussée 5. En effet, dans un tel mode de réalisation, le moyen de poussée 5 peut être fixe dans la direction X, et d'une longueur inférieure à la longueur du convoyeur intermédiaire 4 dans la direction longitudinale. Les produits 1 les plus en aval dans le lot sur le convoyeur intermédiaire 4 ne sont alors plus en contact avec le moyen de poussée 5 lors du transfert entre le convoyeur intermédiaire 4 et le convoyeur de sortie 3. On a donc une partie du lot de produits 1 qui est transférée par le moyen de poussée 5, et l'autre partie par le guide 6, cette dernière ayant été dégagée du moyen de poussée 5 par la mouvement longitudinal du convoyeur intermédiaire 4 sur lequel reposent les produits. Lorsque tous les produits 1 du lot sont transférés vers le convoyeur de sortie 3, le lot est ainsi reconstitué sans espacement entre les produits 1 dudit lot, en particulier du fait que les produits d'un même lot sont tous posés sur le convoyeur intermédiaire 4 et avancent donc longitudinalement à la même vitesse, ni entre ceux-ci.

Ainsi, le guide 6 est disposé au-dessus du convoyeur intermédiaire 4 et rabat les produits sur le convoyeur de sortie 3. Il se trouve donc au-dessus du convoyeur intermédiaire 4, en aval de la portion qui se trouve au droit de la surface d'accumulation 2. Il agit sur les produits qui sont dégagés du moyen de poussée 5, ce dernier étant immobile dans la direction d'avance du convoyeur intermédiaire 4, alors que les produits sont déplacés par l'accélération du convoyeur intermédiaire 4.

Par un réglage adapté des différents paramètres cinématiques, on peut obtenir que les produits d'un lot sont au final disposés sur le convoyeur de sortie 3 sans espacement significatif avec les produits du lot précédent, formant donc une ligne discontinue, et sans espacement significatif entre les produits du même lot.

Le dispositif de transfert selon l'invention peut comporter un bac de réception à côté du convoyeur de sortie 3, de l'autre côté par rapport au convoyeur intermédiaire 4. Ce bac de sortie peut recueillir les produits 1 en cas de chute.

Dans le mode de réalisation représenté en fig. 1, le moyen de poussée 5 comporte une paroi de poussée 7, s'étendant le long de la direction X et disposée de façon à pousser les produits 1 lors du mouvement du moyen de poussée 5 dans la direction Y. Le moyen de poussée 5 comporte en outre une paroi de maintien 8, disposée de l'autre côté du lot de produits transféré de façon à empêcher une chute en avant des produits 1, ainsi qu'un éventuel glissement desdits produits 1 selon la direction Y, ce qui résulterait en un non alignement des produits 1.

Les parois de poussée 7 et de maintien 8 peuvent s'étendre depuis un châssis, monté sur une glissière s'étendant dans la direction Y. Un actionneur de type moteur électrique permet de produire les mouvements du moyen de poussée 5 dans la direction Y, par l'intermédiaire d'une courroie par exemple.

Ladite glissière s'étendant dans la direction Y transversale est elle-même fixée sur un châssis monté sur une glissière verticale. Un actionneur de type moteur électrique permet de produire les mouvements verticaux du moyen de poussée 5, par l'intermédiaire d'une courroie par exemple.

Le moyen de poussée 5 peut en effet être amené à se déplacer verticalement pour aller au-dessus des produits en chercher d'autres : il se lève pour aller au-dessus des produits, puis redescend. Le moyen de poussée 5 est alors au moins partiellement contre le prochain lot ou groupe de produits qu'il doit pousser depuis la surface d'accumulation 2 jusque sur le convoyeur intermédiaire 4. A chaque cycle, le moyen de poussée 5 traite un lot constituée d'une rangée longitudinale, c'est-à-dire s'étendant dans la direction du convoyeur de sortie 3, large d'un seul produit. A chaque cycle, le moyen de poussée 5 revient juste derrière le lot suivant à traiter, large d'un produit, mais avant le lot encore au-delà sur la surface d'accumulation 2.

On peut aussi imaginer une solution robotique multiaxe pour déplacer le moyen de poussée 5.

Le transfert des produits 1 d'une surface d'accumulation 2 vers un convoyeur de sortie 3, peut être mis en oeuvre selon un procédé comportant les étapes suivantes :
- transfert des produits 1 de la surface d'accumulation 2 vers le convoyeur intermédiaire 4, par le moyen de poussée 5, la vitesse selon X du convoyeur intermédiaire 4 étant nulle ou presque nulle,
- accélération du convoyeur intermédiaire 4, par exemple jusqu'à une vitesse proche de, ou égale à la vitesse du convoyeur de sortie 3, de façon à ce que les risques de chute de produits 1 lors du transfert entre les convoyeurs 3, 4 soient suffisamment faibles,
- transfert des produits 1 du convoyeur intermédiaire 4 vers le convoyeur de sortie 3 par le moyen de poussée 5,
- retour du moyen de poussée 5 vers sa position de départ, en passant par une élévation dudit moyen de poussée 5, pour passer au-dessus des produits 1.

Ces étapes peuvent alors se répéter plusieurs fois de façon cyclique, transférant à chaque fois un lot de la surface d'accumulation 2 vers le convoyeur de sortie 3.

Une différence de vitesse longitudinale inférieure à 0,05 m/s, voire de 0,1 m/s, entre le convoyeur intermédiaire et le convoyeur de sortie d'une part, et avec la surface d'accumulation d'autre part pour les transferts respectifs correspondants pourra notamment être considérée comme suffisamment faible pour réduire significativement le risque de chutes de produits 1 du fait de cette différence lors du passage d'une surface à l'autre. On comprend que la différence de vitesse longitudinale maximale dépend de la stabilité du produit traité.

Les étapes de changement de vitesse du convoyeur intermédiaire 4, qu'il s'agisse d'accélérations ou de décélérations, sont réalisées avec des valeurs d'accélération suffisamment faibles pour limiter le risque de chutes ou glissements longitudinaux, de produits 1, et suffisamment élevées pour que le procédé de transfert ne soit pas trop long et que le dispositif de transfert ne prenne pas trop d'espace. On peut prévoir en particulier une valeur d'accélération plus faible du fait que le convoyeur intermédiaire 4 est chargé de produits 1, et une valeur de décélération plus forte du fait que le convoyeur intermédiaire 4 est vide.

Le procédé selon l'invention peut ainsi être utilisé afin de transférer des produits 1 d'une surface d'accumulation 2 vers un convoyeur de sortie 3, comme illustré en fig. 1 et 2. Après avoir été stockés sur la surface d'accumulation 2 pendant un temps plus ou moins long, on veut amener les produits 1 par exemple vers une machine en aval.

Le dispositif selon l'invention permet alors d'obtenir un placement des produits 1 sur le convoyeur de sortie 3 sans espacement significatif entre deux lots transférés successifs ni entre les produits qui le constituent, grâce à la combinaison du moyen de poussée 5 et du guide 6.

Par un réglage adapté de l'instant de départ du mouvement de poussée, de son accélération et de sa vitesse maximale, on peut obtenir que l'espace créé entre la partie du lot transférée par le moyen de poussée 5, et le lot précédent est comblé par les produits 1 transférés par le guide 6.

Le moyen de poussée 5 est mobile transversalement selon Y, pour effectuer la poussée. On peut prévoir une valeur d'accélération de ce mouvement, une vitesse maximale, et une valeur de décélération. On peut prévoir une valeur de décélération plus faible que la valeur d'accélération, pour éviter que les produits 1 ne poursuivent leur course selon la direction Y seuls, et amènent à un lot de produits décalé, surtout si le moyen de poussée 5 ne comporte pas de paroi de maintien 8. En effet ils sont ralentis transversalement par le frottement sur le convoyeur 3, 4 ou la surface d'accumulation 2, et le moyen de poussée 5 ne doit donc de préférence pas ralentir de façon plus forte que le ralentissement produit par ce frottement.

Lors du transfert, le principal risque de chute de produits 1 est alors dû à la vitesse relative selon X entre la surface d'accumulation 2 et le convoyeur intermédiaire 4, puis entre le convoyeur intermédiaire 4 et le convoyeur de sortie 3.

Le moyen de poussée 5, une fois la poussée effectuée, doit ensuite revenir dans une position lui permettant de chercher le lot suivant de produits 1 sur la surface d'accumulation 2, et de le transférer. Cette position dépend donc éventuellement de la configuration de la surface d'accumulation 2 et de son remplissage. Le lot suivant de produits 1 à transférer peut être approché du convoyeur intermédiaire 4 dans le cas où la surface d'accumulation 2 comprend une bande mobile selon Y, sur laquelle les produits 1 sont reçus. Le moyen de poussée 5 doit revenir dans la position initiale sans heurter les produits 1 suivants, qu'il devra pousser transversalement selon Y lors du cycle suivant. On peut imaginer un mouvement longitudinal selon X suffisamment rapide et ample pour atteindre ce but, en décalant longitudinalement le moyen de poussée 5 selon X jusqu'à passer au-delà de tous les produits 1 au moins du lot suivant. Ceci est plus facilement réalisable dans le cas où le moyen de poussée 5 consiste en une simple paroi de poussée 7, en l'absence de paroi de maintien 8, qui obligerait également à passer au-delà de tous les produits 1 du lot qui vient d'être poussé.

Plus simplement, on peut prévoir que le moyen de poussée 5 effectue un mouvement vertical selon Z d'une valeur supérieure à la hauteur des produits 1, pour passer au-dessus des produits 1 lorsqu'il doit chercher le lot suivant de produits 1 sur la surface d'accumulation 2 et insérer la paroi de poussée entre deux lots successifs de produits 1 selon l'axe Y. Les valeurs d'accélération et de décélération de ces mouvements verticaux seront à déterminer en fonction des moyens mécaniques mis en oeuvre, le moyen de poussée 5 n'étant pas en interaction avec les produits 1 pendant ces mouvements.

Dans certains modes de réalisation, comme notamment illustré à la figure 2, le moyen de poussée 5 peut être suffisamment grand le long de la direction longitudinale X, de sorte à transférer à lui seul un rang de produits 1 depuis la surface d'accumulation 2 jusque sur le convoyeur de sortie 3 au moyen de balayages selon la direction transversal Y.

Un tel moyen de poussée 5 doit être dimensionné pour pouvoir transférer un même rang de produits 1 :
- depuis la surface d'accumulation 2 jusque sur le convoyeur intermédiaire 4,
- puis, depuis le convoyeur intermédiaire 4 jusque sur le convoyeur de sortie 3 alors que ce rang a avancé le long de la direction X pour que le convoyeur 4 atteigne une vitesse proche de celle du convoyeur 3 de sortie.

En d'autres termes, selon ces modes de réalisation, le moyen de poussée 5 est plus long que le rang transféré. En particulier :
- il s'étend au moins au-delà de m'extrémité aval du rang qu'il transfère le long de la direction longitudinale X lorsqu'il transfère ce rang sur le convoyeur intermédiaire 4, et
- il s'étend au moins au-delà de m'extrémité amont du rang qu'il transfère le long de la direction longitudinale X lorsqu'il transfère ce rang sur le convoyeur de sortie 3.

Ainsi, le moyen de poussée 5 peut notamment avoir une longueur légèrement inférieure, voire sensiblement équivalente à la longueur du convoyeur intermédiaire 4. De cette manière, il peut agir sur des produits 1 quel que soit leur positionnement sur ce convoyeur 4.

De la même manière que dans les modes de réalisation expliqués précédemment, le moyen de poussée 5 dimensionné pour transférer l'intégralité d'un rang de produits 1 depuis la surface d'accumulation 2 jusque sur le convoyeur extérieur 3, peut comporter une paroi de poussée 7 et une paroi de maintien 8, comme illustré à la figure 2.

Dans ce cas, les deux parois 7,8 peuvent être de longueur identique ou différente. De préférence, seule la paroi 7, qui réalise la poussée est dimensionnée tel que décrit ci-dessus pour pouvoir rester en prise avec les produits 1 d'un même rang tout au long du procédé, comme illustré à la figure 2. En effet, la paroi de maintien 8 n'a pas nécessairement besoin de s'étendre sur toute la longueur du rang lors de son transfert du convoyeur intermédiaire vers le convoyeur de sortie 3, du fait que la cinématique de ce mouvement engendre un risque de chute plus faible que la cinématique du mouvement transversal de transfert depuis la surface d'accumulation 2 jusque sur le convoyeur intermédiaire 4. En effet, lors du transfert du convoyeur 4 vers le convoyeur 3, les produits soient déjà animés d'un mouvement longitudinal.

Il est même préférable que la paroi de maintien 8 soit sensiblement de la même longueur que les rangs de produits 1 transférés, de sorte à limiter le risque d'interférence avec des produits 1 se trouvant déjà sur le convoyeur 3 de sortie lors du transfert d'un nouveau rang de produits 1 sur ce convoyeur 3.

Les modes de réalisation tels qu'illustré à la figure 2 sont particulièrement avantageux dans la mesure où la mise en oeuvre est aisée et le risque de chute et de rotation de produits lors des étapes de transfert est amoindri.

## Revendications

1. Procédé de transfert de produits (1) depuis une surface d'accumulation (2) vers un convoyeur de sortie (3) configuré pour convoyer des produits dans un sens longitudinal, ledit transfert étant effectué au moyen d'un moyen de poussée (5) et qui se fait en outre au moyen d'un convoyeur intermédiaire (4) disposé entre ladite surface d'accumulation (2) et ledit convoyeur de sortie (3) et à fleur avec la surface d'accumulation (2), ledit convoyeur intermédiaire (4) disposant d'un moyen d'entraînement distinct par rapport audit convoyeur de sortie (3) de sorte à pouvoir faire varier la vitesse dudit convoyeur intermédiaire (4) indépendamment de celle dudit convoyeur de sortie (3), et **caractérisé en ce que** le convoyeur intermédiaire (4) est également à fleur avec ledit convoyeur de sortie, et **en ce que** ledit procédé comporte les étapes suivantes :
- décélération du convoyeur intermédiaire (4), et transfert des produits (1) entre la surface d'accumulation (2) et le convoyeur intermédiaire (4) par ledit moyen de poussée (5),
- accélération du convoyeur intermédiaire (4), et transfert des produits du convoyeur intermédiaire (4) vers le convoyeur de sortie (3) par ledit moyen de poussée (5).

2. Procédé selon la revendication précédente, comportant en outre les étapes suivantes :
- levée du moyen de poussée (5) depuis sa hauteur de poussée jusqu'à ce qu'il soit plus haut que les produits (1),
- retour transversal du moyen de poussée (5) vers la surface d'accumulation, jusqu'à une position où il peut s'insérer entre le lot suivant et celui d'après,
- descente du moyen de poussée (5) jusqu'à sa hauteur de poussée.

3. Dispositif de transfert de produits (1) depuis une surface d'accumulation (2) vers un convoyeur de sortie (3) configuré pour convoyer des produits dans un sens longitudinal, ledit dispositif comportant ladite surface d'accumulation (2), ledit convoyeur de sortie (3) et un moyen de poussée (5) mobile transversalement, ledit dispositif comporte un convoyeur intermédiaire (4), disposé entre la surface d'accumulation (2) et le convoyeur de sortie (3) et adjacent et à fleur avec la surface d'accumulation (2), de sorte à permettre un transfert de produits (1) par déplacement transversal dudit moyen de poussée (5) entre la surface d'accumulation (2) et le convoyeur intermédiaire (4), ledit convoyeur intermédiaire (4) dispose d'un moyen d'entraînement distinct par rapport au convoyeur de sortie (3) de sorte à pouvoir faire varier la vitesse du convoyeur intermédiaire (4) indépendamment de celle du convoyeur de sortie (3), ledit moyen de poussée (5) étant configuré d'une part pour pousser les produits depuis la surface d'accumulation (2) vers le convoyeur intermédiaire (4), d'autre part pour pousser les produits depuis le convoyeur intermédiaire (4) vers le convoyeur de sortie et en ce que le dispositif est configuré de sorte que lors d'un transfert de produits (1):
- le convoyeur intermédiaire (4) décélère, et ledit moyen de poussée (5) transfère des produits (1) entre la surface d'accumulation (2) et le convoyeur intermédiaire (4),
- le convoyeur intermédiaire (4) accélère, et ledit moyen de poussée (5) transfère des produits du convoyeur intermédiaire (4) vers le convoyeur de sortie (3).

4. Dispositif de transfert de produits (1) selon la revendication 3 dans lequel ledit moyen de poussée (5) comporte une paroi de poussée (7), et une paroi de maintien (8).

5. Dispositif de transfert de produits (1) selon l'une des revendications 3 ou 4 dans lequel ledit moyen de poussée (5) comporte un mécanisme de levage, configuré pour lui permettre de passer au-dessus des produits (1).

## Patentansprüche

1. Verfahren zum Transfer von Produkten (1) von einer Sammelfläche (2) zu einem Ausgangsförderer (3), der dazu konfiguriert ist, die Produkte in einer Längsrichtung zu fördern, wobei der Transfer mit Hilfe eines Schubmittels (5) vorgenommen wird und ferner mit Hilfe eines Zwischenförderers (4) erfolgt, der zwischen der Sammelfläche (2) und dem Ausgangsförderer (3) und bündig mit der Sammelfläche (2) angeordnet ist, wobei der Zwischenförderer (4) über ein in Bezug auf den Ausgangsförderer (3) separates Antriebsmittel verfügt, so dass die Geschwindigkeit des Zwischenförderers (4) unabhängig von der des Ausgangsförderers (3) variiert werden kann, und **dadurch gekennzeichnet, dass** der Zwischenförderer (4) ebenfalls bündig mit dem Ausgangsförderer angeordnet und dass das Verfahren die folgenden Schritte umfasst:
- Abbremsen des Zwischenförderers (4) und Transfer der Produkte (1) zwischen der Sammelfläche (2) und dem Zwischenförderer (4) durch das Schubmittel (5),
- Beschleunigen des Zwischenförderers (4) und Transfer der Produkte vom Zwischenförderer (4) zum Ausgangsförderer (3) durch das Schubmittel (5).

2. Verfahren nach dem vorangehenden Anspruch, ferner umfassend die folgenden Schritte:
- Anheben des Schubmittels (5) aus seiner Schubhöhe, bis es höher als die Produkte (1) ist,
- querlaufendes Zurückführen des Schubmittels (5) zur Sammelfläche bis in eine Position, in der es sich zwischen die nächste und die übernächste Charge einfügen kann,
- Absenken des Schubmittels (5) bis auf seine Schubhöhe.

3. Vorrichtung zum Transfer von Produkten (1) von einer Sammelfläche (2) zu einem Ausgangsförderer (3), der dazu konfiguriert ist, die Produkte in einer Längsrichtung zu befördern, wobei die Vorrichtung die Sammelfläche (2), den Ausgangsförderer (3) und ein quer bewegliches Schubmittel (5) umfasst, wobei die Vorrichtung einen Zwischenförderer (4) umfasst, der zwischen der Sammelfläche (2) und dem Ausgangsförderer (3) sowie angrenzend an und bündig mit der Sammelfläche (2) angeordnet ist, um einen Transfer von Produkten (1) durch Querbewegung des Schubmittels (5) zwischen der Sammelfläche (2) und dem Zwischenförderer (4) zu ermöglichen, wobei der Zwischenförderer (4) über ein in Bezug auf den Ausgangsförderer (3) separates Antriebsmittel verfügt, so dass die Geschwindigkeit des Zwischenförderers (4) unabhängig von der des Ausgangsförderers (3) variiert werden kann, wobei das Schubmittel (5) so konfiguriert ist, dass es einerseits die Produkte von der Sammelfläche (2) zum Zwischenförderer (4) schiebt und andererseits die Produkte vom Zwischenförderer (4) zum Ausgangsförderer schiebt, und dass die Vorrichtung so konfiguriert ist, dass bei einem Transfer von Produkten (1):
- der Zwischenförderer (4) abbremst und das Schubmittel (5) Produkte (1) zwischen der Sammelfläche (2) und dem Zwischenförderer (4) transferiert,
- der Zwischenförderer (4) beschleunigt und das Schubmittel (5) Produkte vom Zwischenförderer (4) zum Ausgangsförderer (3) transferiert.

4. Vorrichtung zum Transfer von Produkten (1) nach Anspruch 3, wobei das Schubmittel (5) eine Schubwand (7) und eine Haltewand (8) umfasst.

5. Vorrichtung zum Transfer von Produkten (1) nach einem der Ansprüche 3 oder 4, wobei das Schubmittel (5) einen Hebemechanismus aufweist, der so konfiguriert ist, dass er sich über die Produkte (1) hinwegbewegen kann.

## Claims

1. Method for transferring products (1) from an accumulation surface (2) to an output conveyor (3) designed to convey products in a longitudinal direction, said transfer being executed using pushing means (5) and that is also done using an intermediate conveyor (4) arranged between said accumulation surface (2) and said output conveyor (3) and flush with the accumulation surface (2), said intermediate conveyor (4) having drive means separate from said output conveyor (3) to enable the speed of said intermediate conveyor (4) to be varied independently of the speed of said output conveyor (3), and **characterized in that** the intermediate conveyor (4) is also flush with said output conveyor, and **in that** said method includes the following steps:
- deceleration of the intermediate conveyor (4) and transfer of the products (1) between the accumulation surface (2) and the intermediate conveyor (4) by said pushing means (5),
- acceleration of the intermediate conveyor (4) and transfer of the products from the intermediate conveyor (4) to the output conveyor (3) by said pushing means (5).

2. Method according to the preceding claim, further including the following steps:
- raising of the pushing means (5) from the pushing height thereof until said means are higher than the products (1),
- transverse return of the pushing means (5) to the accumulation surface, to a position where said means can be inserted between the next batch and the batch after that,
- lowering of the pushing means (5) to the pushing height thereof.

3. Device for transferring products (1) from an accumulation surface (2) to an output conveyor (3) designed to convey products in a longitudinal direction, said device including said accumulation surface (2), said output conveyor (3) and transversely movable pushing means (5), said device includes an intermediate conveyor (4), arranged between the accumulation surface (2) and the output conveyor (3) and adjacent to and flush with the accumulation surface (2) to enable a transfer of products (1) by transverse displacement of said pushing means (5) between the accumulation surface (2) and the intermediate conveyor (4), said intermediate conveyor (4) has drive means separate from the output conveyor (3) to enable the speed of the intermediate conveyor (4) to be varied independently of the speed of the output conveyor (3), said pushing means (5) being designed on one hand to push the products from the accumulation surface (2) to the intermediate conveyor (4), and on the other hand to push the products from the intermediate conveyor (4) to the output conveyor, and in that the device is designed so that, during a transfer of products (1):
- the intermediate conveyor (4) decelerates, and said pushing means (5) transfer the products (1) between the accumulation surface (2) and the intermediate conveyor (4),
- the intermediate conveyor (4) accelerates, and said pushing means (5) transfer products from the intermediate conveyor (4) to the output conveyor (3).

4. Device for transferring products (1) according to Claim 3, wherein said pushing means (5) include a pushing wall (7) and a holding wall (8).

5. Device for transferring products (1) according to either of Claims 3 and 4, wherein said pushing means (5) include a lifting mechanism designed to enable said means to pass above the products (1).
